# EUROPEAN PATENT SPECIFICATION

(11) **EP 1 915 824 B1**
(45) Date of publication and mention of the grant of the patent: **16.11.2011**
(21) Application number: 06769092.5
(22) Date of filing: 28.06.2006
(51) Int. Cl.: H04M 1/02

(54) **Slidable portable device**
Verschiebbares tragbares Gerät
Dispositif portable coulissant

(30) Priority: 18.08.2005 KR 20050075822
(43) Date of publication of application: 30.04.2008
(73) Proprietor: Shell-Line Co., Ltd., Gumi-si, Gyeongsangbuk-do 730-320 (KR)
(72) Inventor: LEE, Sang Ho, Daegu 704-130 (KR); KIM, Byung Han c/o Shell-Line, 6L 6B, Reg. Industrial Areas, Daegu 704-801 (KR)
(74) Representative: Rupprecht, Kay
(86) International application number: PCT/KR2006/002520
(87) International publication number: WO 2007/021075

(56) References cited:
- WO-A1-2004/112267
- WO-A1-2005/020452
- KR-B1- 100 453 644
- US-A1- 2004 203 496

## Description

### Technical Field

The present invention relates to a personal portable device. More particularly, the present invention relates to a slide type personal portable device having two slide device bodies which slide against with each other.

### Background Art

A slide type mobile phone includes a main device body and a slide device body, the slide device body may slide against the main device body. Generally, a slide hinge module is interposed between the main device body and the slide device body, and two parts of the slide hinge module respectively combined with the main device body and the slide device body to combine the device bodies and facilitate a sliding movement of the device bodies.
Korean Patent No. 10-453644 discloses a "sliding device" which is installed between two terminal bodies to relatively slide on each other. The sliding device comprises a guide rail member, a sliding member for slidingly moving on the guide rail member, and two torsion springs and for automatically actuating the sliding member. The guide rail member includes a rectangular plate and two guide bars mounted parallel adjacent to the both sides of the rectangular plate, respectively. The sliding member is engaged with the guide rail member to straightly slide on it. The sliding member includes a rectangular substrate and two sliding couplings formed on both side of the substrate, in which the sliding couplings have guide holes for the guide bars, respectively. In order to reduce friction when sliding, bearings are inserted into the guide holes of the sliding member.

In a sliding type cell phone, the rectangular plate is fixed to a front terminal body and the rectangular substrate is fixed to a rear terminal body, respectively. Namely, for smooth sliding, the plate for installation of the guide bars is mounted on a lower plastic case of the front terminal body and the substrate for moving along the guide bars is mounted on a lower plastic case of the second terminal body, to be fixed by screws.

Since the plate and the substrate are overlapped and fixed on the cases, it is very difficult to reduce a thickness of the phone or make it slim. Also, since the plate and the substrate are fixed on the cases by screw coupling, it is very troublesome to assemble the sliding device between the terminal bodies.

Further, conventional slide hinge modules, including the above sliding device, are manufactured through complicated processes, such as aluminum (Al) casting, aluminum extrusion molding, hole-processing for forming a screw hole after the Al casting or the Al extrusion molding, tap processing after the hole-processing, side-T cutting for polishing a rail, and the like. As slimness for the slide hinge module is required, a manufacturing process and requirements become complex and manufacturing costs of the slide hinge module increase. Also, since many post processes are required for the conventional slide hinge module, a defect rate increases and wobbling of the slide hinge module occurs after assembling the mobile phone. Subsequently, a new personal portable device which can solve the problems of the conventional art is earnestly required.

### Disclosure of Invention

### Technical Goals

The present invention provides a personal portable device which can omit the conventional processes, e.g. polishing, a brush operation, hole-processing for forming a screw hole, T cutting for frictionless motion, fluoride resin coating, and the like, and reduce manufacturing costs since processes utilized in a conventional art.

The present invention also provides a personal portable device which can be manufactured with fewer manufacturing processes than the manufacturing processes performed in a conventional art, e.g. manufacturing and assembling of a hinge module, and manufacturing and assembling of the device.

The present invention also provides a personal portable device which can dramatically reduce a thickness of the personal portable device by eliminating a conventional hinge module structure.

### Technical solutions

According to an aspect of the present invention, there is provided a personal portable device including a first device body, a slide guide, a shaft and a second device body. A conventional slide hinge module is combined with a main body using a guide frame connecting a slide guide, and may be combined with a slide body using a rail plate which is integrally connected with the shaft. Generally, the guide frame and the rail plate are combined with the device bodies by screw coupling, respectively, and hole-processing is required to assure a length that is at least as long as the screw length. Therefore, in the conventional device, an entire process may become complex and a slide type personal portable device may become thicker. Also, in a case of the guide frame and the rail plate made of A1, a clear telephone function may be interfered with due to an influence of a peripheral electromagnetic field.

However, according to the personal portable device of the present invention, a guide frame utilized in a conventional art may be eliminated, and the combining the slide guide with the guide frame, and the combining the guide frame with the first device body may be eliminated since the slide guide is directly combined with a first device body. Also, during a course of combining the shaft with the second device body, the shaft may be directly inserted into the guide hole of the slide guide, and subsequently the rail plate and an assembling process associated with the rail plate may be eliminated. Generally, since a case of the device body is made of a plastic material, interference of an electromagnetic wave during use of the personal portable device may be prevented, and various shapes of upper cases and lower cases may be easily manufactured by injection molding.

The shaft is combined with a rear or a side of the personal portable device. The shaft is spaced apart from an exterior of the device body by a predetermined distance, both ends of the shaft may be partially received by the second device body the slide guide, so that the slide guide moves along the shaft within a predetermined section.

According to another aspect of the present invention, there is provided a personal portable including a slide guide device which has a double-structure. A shaft is combined with a second device body, the second device body may move along the guide holes with the shaft in a longitudinal direction. As described above, when the slide guide is made of a metal, complex processes, e.g. hole-processing, casting, tap processing, side-T cutting, and the like, are required. Conversely, when the slide guide is made of a resin, such as a plastic, the personal portable device may be easily manufactured by injection molding, and the complex processes may be eliminated. However, the plastic is not appropriate for the screw coupling since it is soft, and when the plastic is utilized for the slide guide, a combination portion may be crushed or become loose. According to the personal portable device of the present invention, the slide guide may include a combination portion made of a metal, and a guide portion made of a plastic. The combination portion may be firmly combined with the first device body using a screw hole, and the guide portion may be integrally formed with the combination portion by insert injection molding.

### Brief Description of Drawings

FIG. 1 is an exploded perspective view illustrating a personal portable device according to an exemplary embodiment of the present invention;
FIG. 2 is a side cross-sectional view illustrating assembly of the personal portable device of FIG. 1;
FIG. 3 is a perspective view illustrating a personal portable device according to an exemplary embodiment of the present invention;
FIG. 4 is an exploded perspective view illustrating the personal portable device of FIG 3 according to the exemplary embodiment of the present invention;
FIG. 5 is a perspective view illustrating combination between a slide guide and a shaft when the personal portable device of FIG 3 is partially assembled;
FIG. 6 is a perspective view illustrating a slide guide according to an exemplary embodiment of the present invention;
FIG. 7 is a cross-sectional view illustrating the slide guide of FIG 6;
FIG. 8 is an exploded perspective view illustrating the slide guide of FIG 6;
FIG. 9 is a perspective view illustrating a personal portable device according to an exemplary embodiment of the present invention;
FIG. 10 is an expanded perspective view illustrating combination of a spring holding portion and a peanut-shaped hole of FIG 9;
FIG. 11 is an expanded perspective view illustrating combination between the spring holding portion and the peanut-shaped hole of FIG9.

### Best Mode for Carrying Out the Invention

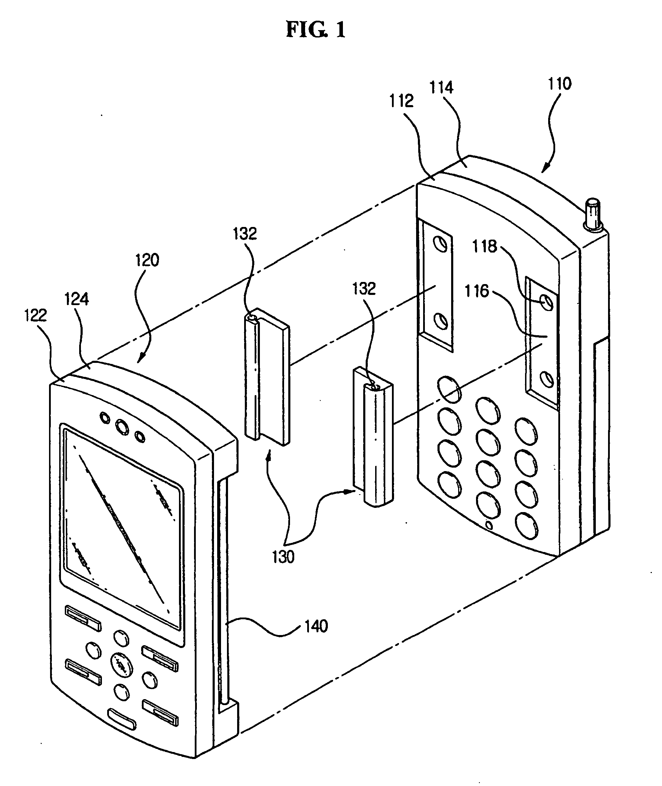

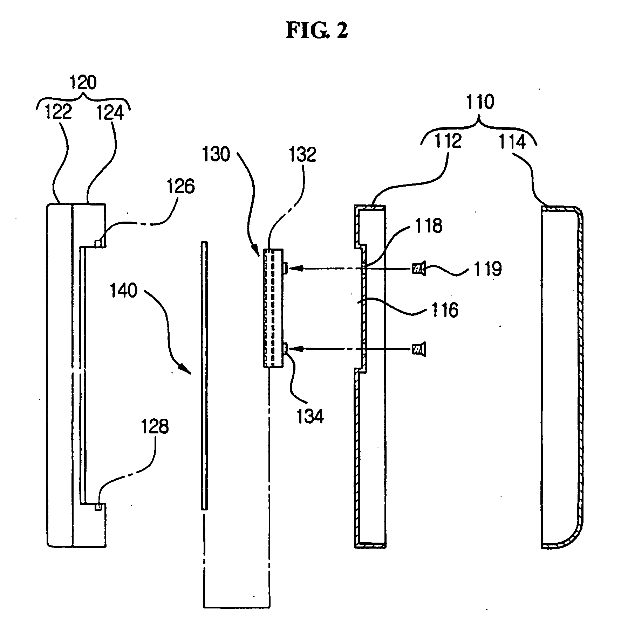

FIG 1 is an exploded perspective view illustrating a personal portable device according to an exemplary embodiment of the present invention, and FIG 2 is a side cross-sectional view illustrating assembly of the personal portable device of FIG 1.

Referring to FIG 1 and FIG 2, the personal portable device includes a first device body 110, a slide guide 130, a shaft 140, and a second device body 120. Two slide guides 130 are combined with the first device body 110, and two shafts 140 are combined with the second device body 120, while having an identical width to the slide guide 130. During a course of assembling, the shaft 140 and the slide guide 130 may be combined with each other, and the shaft 140 may move in a longitudinal direction of the slide guide 130. Subsequently, the second device body 120 longitudinally moves against the first device body 110 as a slide part.

In this instance, the first device body 110 may correspond to a main device body of the slide type personal portable device. According to a general structure of the slide type personal portable device, the first device body 110 includes a first upper case 112 and a first lower case 114, and both of the cases 112 and 114 are combined with each other to form an exterior of the first device body 110. A input keypad is combined on the first upper case 112, and a communication module is mounted in an inside of the first device body 110. Also, the second device body 120 may correspond to the slide device body, the exterior of the second device body 120 is formed by a second upper case 122 and a second lower case 124. As illustrated in FIGS. 1 and 2, a liquid crystal display (LCD) unit is combined on the second device body 120, and several function keys are arranged in a periphery of the LCD unit. In the specification of the present invention, locations and shapes of the input keypad, the LCD unit and the function keys may be variously changed according to a designer.

The slide guide 130 is directly combined with the first upper case 112 of the first device body 110. A reception portion 116 for partially receiving the slide guide 130 is formed outside of the first upper case 112, and a fitting hole 118 for combining the slide guide 130 is formed in the reception portion 116. The fitting hole 118 is formed in a location corresponding to a screw hole 134 of the slide guide 130. Therefore, when the slide guide 130 is contacted with the reception portion 116, locations of the fitting hole 118 and the screw hole 134 are identical with each other, a combination screw 119 may be combined with the screw hole 134 via the fitting hole 118

The slide guide 130 includes a guide hole 132 to guide the shaft 140, and the shaft 140 may repeatedly move on a predetermined path in a longitudinal direction according to a guide of the guide hole 132. In the embodiment, the slide guide 130 is made of a lubricant material. e.g. polyoxymethylene (POM). Also, the slide guide 130 may be made of other plastics besides the lubricant material, and a metal.

The shaft 140 is combined with the second lower case 124 of the second device body 120, and each end of the shaft 140 may respectively received in a first shaft receiving portion 126 and a second shaft receiving portion 128.

The personal portable device does not include an independent slide hinge module, and the first upper case 112 may serve as a guide frame for fixing the slide guide 130. Also, the second lower case 124 may be integrally formed with the shaft 140 as a rail plate. Therefore, thickness of the personal portable device may be slimmer, and assembling operations may become simple.

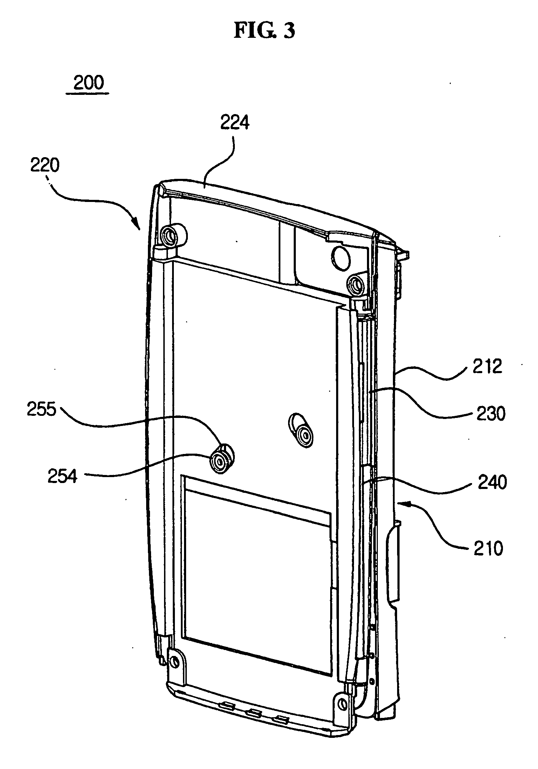

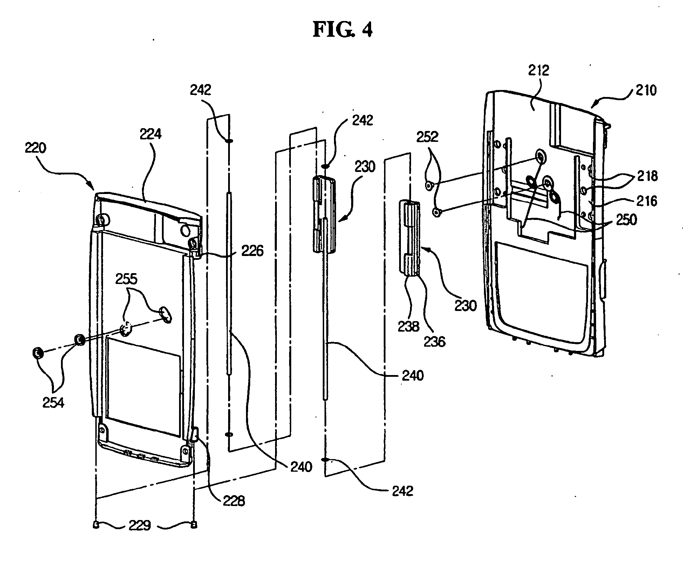

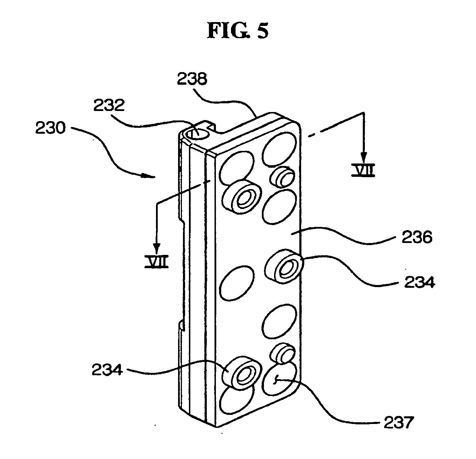

FIG 3 is a perspective view illustrating a personal portable device according to an exemplary embodiment of the present invention, FIG 4 is an exploded perspective view illustrating the personal portable device of FIG 3, and FIG 5 is a perspective view illustrating a combination between a slide guide and a shaft when the personal portable device of FIG 3 is partially assembled.

For reference, in FIGS 3 to 5, only a first upper case 212 of a first device body 210 is illustrated, and a second lower case 224 of a second device body 220 is illustrated.

Referring to FIGS. 3 through 5, a personal portable device 200 includes the first device body 210, a slide guide 230, a shaft 240, a torsion spring 250 and the second device body 220. Two slide guides 230 are combined with the first upper case 212 of the first device body 210, two shafts 240 are combined with the second device body 220, while having an identical width to the slide guide 230. During the assembling of the shaft 240 with the second lower case 224, the shaft 240 and the slide guide 230 may be combined with each other, and the shaft may move in a longitudinal direction, based on the slide guide 230. Therefore, the second device body 220 longitudinally moves against the first device body 210 as a slide part.

The first device body 210 includes a first upper case 212 and a first lower case 214, both of the cases 212 and 214 are combined with each other to form an exterior of the first device body 210. In this instance, the first device body 210 corresponds to a slide device body, the exterior of the second device body 220 is formed by using a second upper case (not shown) and the second lower case 224.

The slide guided 230 is combined with the first upper case 212 of the first device body 210. A reception portion 216 for partially receiving the slide guide 230 is formed outside of the first upper case 212, and a fitting hole 218 for combining the slide guide 330 is formed in the reception portion 216. The fitting hole 218 is formed in a location corresponding to a screw hole 234 of the slide guide 230. A periphery of an inlet of the screw hole 234 of the slide guide 230 is protruded in correspondence to the fitting hole 218. Subsequently, when the slide guide 230 is contacted with the reception portion 216, the protruded inlet of the screw hole 234 is inserted into the fitting hole 218, a combination screw may be coupled with the screw hole 234 via the fitting hole 218. As illustrated in FIG 5, the screw hole 234 is shown toward an inside of the first upper case 212 of FIG 4, the slide guide 230 may be combined with the first upper case 212 by using the screw hole 234.

The slide guide 230 includes a guide hole 232 to guide the shaft 240, and the shaft 240 may repeatedly move on a predetermined path in a longitudinal direction according to a guide of the guide hole 232.

The shaft 240 is combined with the second lower case 224 of the second device body 220. The shaft 240 is formed in a rear portion of the second lower case 224, which faces the first device body 210, and both ends of the shaft 240 may respectively be received in a first shaft receiving portion 226 and a second shaft receiving portion 228. Specifically, the first shaft receiving portion 226 is located on a top of the second lower case 224, and a top of the first shaft receiving portion 226 is closed and a bottom of the first shaft receiving portion 226 is downwardly open. The second shaft receiving portion 228 is located in a vertically identical direction, and located under the first shaft receiving portion 226. Also, a top and a bottom of the second shaft receiving portion 228 is open as a hole, subsequently the shaft 240 passes the second shaft receiving portion 228 and is inserted into the first shaft receiving portion 226. Since one side of the first shaft receiving portion 226 is closed, the first shaft receiving portion 226 may support one end of the shaft 240. In this instance, the other end of the shaft 240 is located in the second shaft receiving portion 228. In order to prevent the shaft 240 from moving, a fixing bracket 229 is inserted into the externally exposed second shaft receiving portion 228. The fixing bracket 229 may be fixed to the second shaft receiving portion 228 by means of a screw, and may be fixed to the second shaft receiving portion 228 in other means, e.g. by means of an adhesive or press-fitting.

The shaft 240 is made of a metal or a replaceable material, and is formed in a sufficient length to be capable of connecting the first and the second shaft receiving portion 226 and 228. O-rings 242 are provided on the both end portions of the shaft 240 to be respectively in contact with the first and the second shaft receiving portions 226 and 228. The O-rings 242 are attached while the shaft 240 is inserted into the first and the second shaft receiving portion 226 and 228, and are located on both ends of a path which is defined by the shaft 240 to lessen a shock transmitted from the slide guide 230.

Referring to FIG 4, the torsion spring 250 is interposed between the first upper case 212 and the second lower case 224. The torsion spring 250 includes a coil which is located in a center therein, one end of a wire extended from the coil is rotatably combined with the first upper case 212 and the second lower case 224, and the torsion spring 250 may be provided between the first device body 210 and the second device body 220 with a repulsive force, so that the first device body 210 and the second device body 220 remains open or closed, when the second device body 220 is in the uppermost or lowest position. Also, when the second device body 220 longitudinally moves on a path, and once a user slides the second device body 220 to a point in which a direction of the repulsive force switches, the second device body 220 automatically begins to move on a remainder of the path. As described above, the second device body 220 may semi-automatically open and close using the torsion spring 250. In the torsion spring 250, the end of the wire combined with the first upper case 212 is bent in a small circular shape, and the bent end may be fixed to the first upper case 212 of the wire by rivets 252. In the rivets 252, since a rivet head maintains a predetermined distance from the first upper case 212, the bent end of the torsion spring 250 may smoothly rotate within the predetermined distance between the rivet head and the first upper case 212, and may stably rotate without wobbling due to a guide of the rivet 252. The other end of the torsion spring 250 is rotatably combined with a spring holding portion 254 of the second lower case 224.

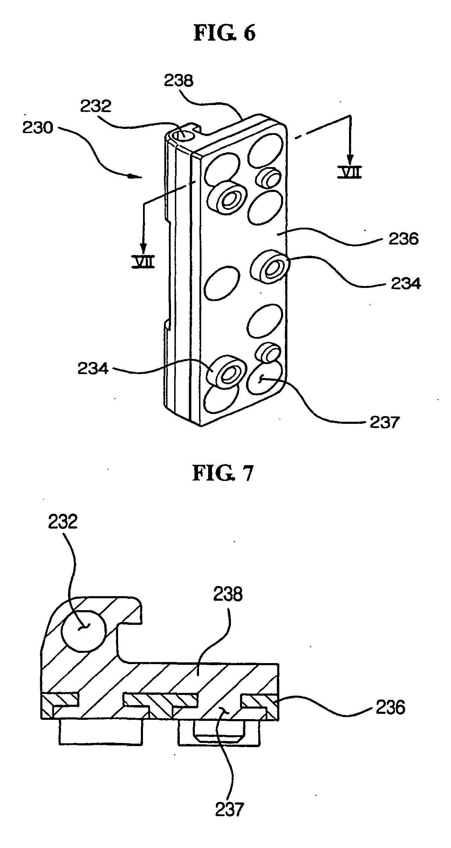

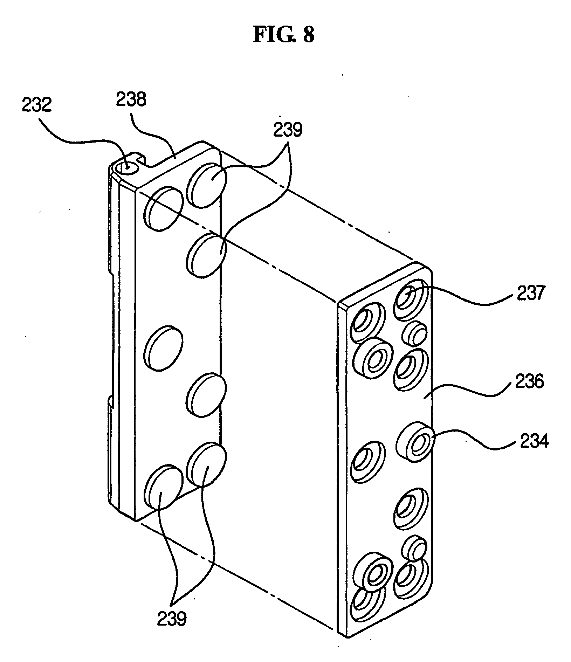

FIG 6 is a perspective view illustrating a slide guide according to an exemplary embodiment of the present invention, FIG 7 is a cross-sectional view illustrating the slide guide of FIG 6, and FIG 8 is an exploded perspective view illustrating the slide guide of FIG 6.

Referring to FIGS 6 through 8, the slide guide 230 has a double-structure. Specifically, the slide guide 230 includes a combination portion 236 and a guide portion 238. In this instance, the combination portion 236 is made of a metal, e.g. Zn, formed by die casting, the guide portion 238 is made of POM, having a lubricant property, and is formed by the combination portion which is formed by insert injection molding.

A screw hole 234 is formed in a rear portion of the combination portion 236, and the slide guide 230 may be contacted with a reception portion 216 of the first upper case 212 via the screw hole 234 whose a periphery of an inlet of is protruded. Also, the combination portion 236 includes an injection hole 237 formed with a fixing protrusion. The injection hole 237 is formed on the combination portion 236, and the fixing protrusion is formed on an inside of the injection hole 237. Subsequently, as illustrated in FIG 7, when the guide portion 238 is formed on one side of the combination portion 236 by insert injection, a space of the injection hole 237 becomes filled with the guide portion 238, and subsequently the filled portion 239 is combined with the fixing protrusion to connect the combination portion 236 and the guide portion 238.

The guide portion 238 includes a guide hole 232, the guide hole 232 may be simultaneously formed during the course of the forming the guide portion 238. The guide portion 238 has a spare space in a center, and a center portion of the guide hole 232 is divided by the spare space.

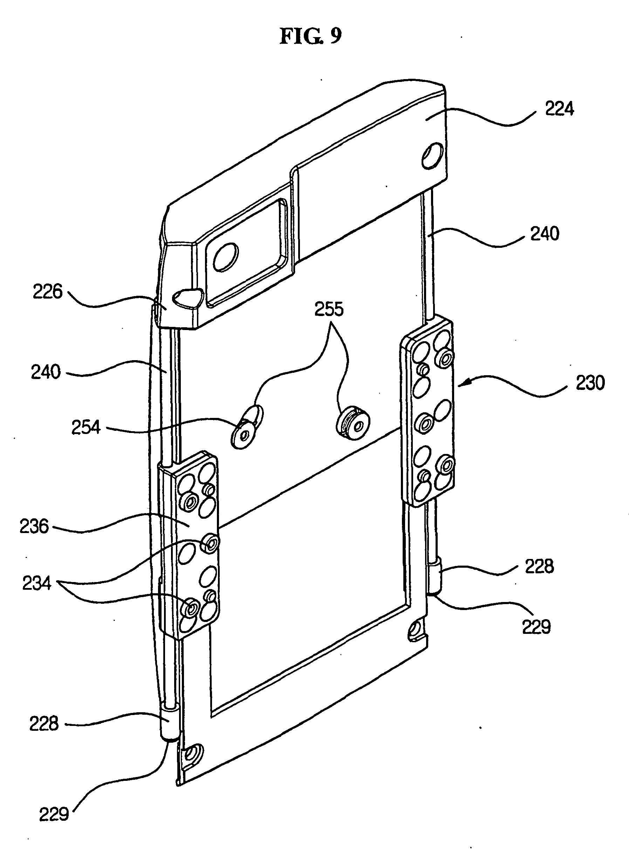

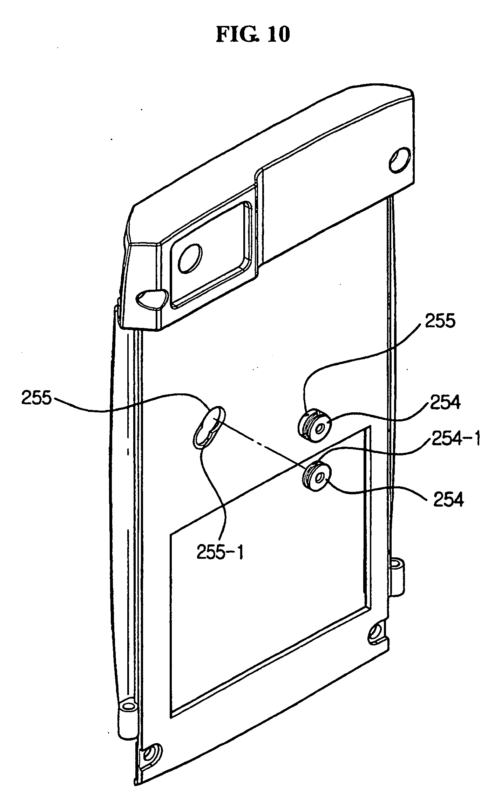

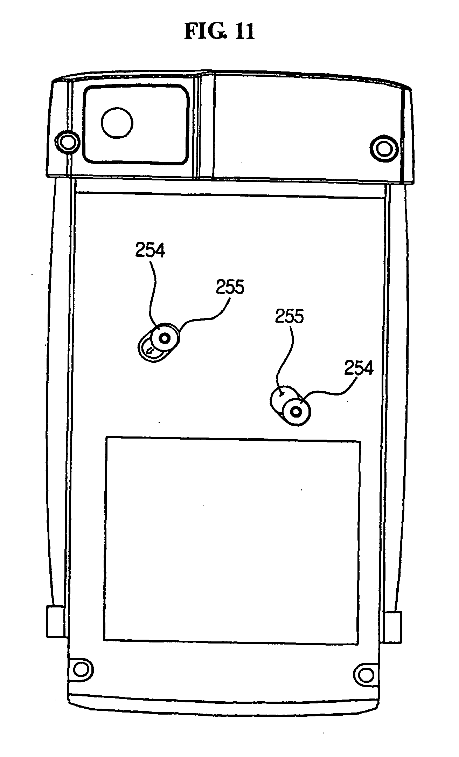

FIG 9 is a perspective view illustrating a personal portable device according to an exemplary embodiment of the present invention, FIG. 10 is an expanded perspective view illustrating a combination of a spring holding portion and a peanut-shaped hole of FIG 9, and FIG 11 is an expanded perspective view illustrating combination between the spring holding portion and the peanut-shaped hole of FIG. 9.

Referring to FIGS 4 and 9, a second lower case 224, a shaft 240 and a slide guide 230 are provided in a connected state. The shaft 240 passes through a second shaft receiving portion 228, is inserted into the first shaft receiving portion 226, and is consequently combined with the second lower case 224 of FIG 4.

While the end of the shaft 240 passes the second shaft receiving portion 228 and moves to the first shaft receiving portion 226, the shaft 240 may be inserted into the slide guide, a bottom of the second shaft receiving portion 228 is closed with the fixing bracket 229, subsequently the shaft 240 may be prevented from being separated.

A screw hole 234 is protrudingly formed toward a rear portion of the combination portion 236 of the slide guide 230, combined with the first upper case 212 by screw coupling, and subsequently the second lower case 224 may be slidably combined with the first upper case 212.

A peanut-shaped hole 255 is formed on a rear wall of the second lower case 224, a spring holding portion 254 may be combined with the peanut-shaped hole 255. The term "peanut-shaped" in the specification may indicate two circles that are overlapped with each other, a slim-waist shape, and a snowman shape. The peanut-shaped hole 255 is asymmetrical, therefore one portion is comparatively greater than the other portion of the peanut-shaped hole 255.

Referring to FIGS. 10 and 11, the spring holding portion 254 includes a spring hole which is formed in a center of the spring holding portion and a groove 254-1 which is formed on a periphery of the spring hole. The spring holding portion 254 is made of a lubricant material, e.g. POM. Subsequently, the spring holding portion 254 is combined with the peanut-shaped hole 255, while moving from a relatively larger space to a relatively smaller space in the peanut-shaped hole 255. In this instance, since the groove 254-1 of the spring holding portion 254 receives a boundary of the smaller space in the peanut-shaped hole 255, a secure combination may be maintained. One end of the torsion spring 250 is inserted to the spring hole of the spring holding portion 254, the one end of the torsion spring 250 may stably rotate within the spring hole.

As described above, abrasion by the torsion spring 250 may be prevented using the lubricant material, and various materials may be utilized for the first device body 210 and the second device body 220, i.e. utilizing a material to prevent direct contact with the torsion spring 250.

### Industrial Applicability

According to the personal portable device of the present invention, manufacturing processes utilized in a conventional art, e.g. polishing, hole-processing for forming a screw hole, T cutting for a frictionless motion, barrel polishing and the like, which are utilized in a conventional art, may be eliminated, and a metal frame/plate structure in a center of the personal portable device may be eliminated.

Also, according to the personal portable device of the present invention, weight and thickness of a personal portable device may be reduced by not including a rail plate and a guide frame.

Also, according to the personal portable device of the present invention, there is provided a personal portable device having a more aesthetically pleasing exterior since various coating, such as an ultraviolet coating, may be utilized instead of a fluoride resin coating.

Also, according to the personal portable device of the present invention, there is provided a personal portable device which can reduce manufacturing costs, a defect rate of manufacturing and a break down of the device since manufacturing and assembling of a hinge module, and manufacturing and assembling of the device.

Although a few embodiments of the present invention have been shown and described, the present invention is not limited to the described embodiments. Instead, it would be appreciated by those skilled in the art that changes may be made to these embodiments without departing from the principles of the invention, the scope of which is defined by the claims and their equivalents.

## Claims

1. A personal portable device including a first device body (110, 210) having a first upper case (112, 212) and a first lower case (114), and a second device body (120, 220) having a second upper case (122) and a second lower case (124, 224) to slidingly move on the first device body (110, 210), the personal portable device comprising:
a slide guide (130, 230) combined with the first upper case (112, 212) of the first device body (110, 210), the slide guide (130, 230) comprising a guide hole (132, 232) longitudinally formed therein; and
a shaft (140, 240) which is inserted into the guide hole (132, 232) to move along the guide hole (132, 232);
wherein the second lower case (124, 224) is spaced apart from the shaft (140, 240) by a predetermined distance and directly receives both ends of the shaft (140, 240),
wherein the second lower case (124, 224) has a first shaft receiving portion (126, 226) and a second shaft receiving portion (128, 228) formed in a rear portion of the second lower case (124, 224) facing the first device body (110, 210), and respectively receives both ends of the shaft (140, 240),
wherein the second device body (120, 220) moves along the guide hole (132, 232) with the shaft (140, 240).

2. The device of claim 1, wherein the slide guide (130, 230) comprises a screw hole (134, 234), the first device body (110, 210) comprises a fitting hole (118, 218) formed in correspondence to the screw hole (134, 234), and a screw (119) enters via the fitting hole (118, 218) to be coupled with the screw hole (134, 234).

3. The device of claim 2, wherein the first device body (110, 210) includes a reception portion (116, 216) for partially receiving the slide guide (130, 230).

4. The device of claim 1, wherein the slide guide (130, 230) is made of a lubricant material and is formed by injection molding.

5. The device of claim 1, wherein one side of the first shaft receiving portion (226) is closed to support one end of the shaft (240), both sides of the second shaft receiving portion (228) are open to pass the shaft (240), and a fixing bracket (229) is inserted into an open outside of the second shaft receiving portion (228) to fix the shaft (240) to the first and second shaft receiving portions (226, 228).

6. The device of claim 1, wherein a torsion spring (250) is interposed between the first upper case (212) and the second lower case (224), one end of the torsion spring (250) is rotatably combined with the first upper case (212), and the other end of the torsion spring (250) is rotatably combined with the second lower case (224).

7. The device of claim 6, wherein the second lower case (224) comprises:
a spring holding portion (254) combined with the other end of the torsion spring (250) and a peanut-shaped hole (255) combined with the spring holding portion (254),
the spring holding portion (254) having a spring hole formed in a center of the spring holding portion (254) and a groove (254-1) formed on a periphery of the spring hole,
the peanut-shaped hole (255) being composed of a large space and a small space which is relatively smaller than the large space and overlapped with the large space, and
the spring holding portion (254) is combined with the peanut-shaped hole (255), while moving from the large space to the small space in the peanut-shaped hole (255).

8. The device of claim 1, wherein O-rings (242) are provided on the both end portions of the shafts (240) to be respectively in contact with the first and the second shaft receiving portions (226, 228).

9. The device of claim 1, wherein the slide guide (230) comprises:
a combination portion (236) made of metal, the combination portion (236) comprising a screw hole (234) and an injection hole (237) formed with a fixing protrusion; and
a guide portion (238) integrally formed with the combination portion (236) by means of the fixing protrusion by plastic molding,
wherein the guide hole (232) is formed in the guide portion(238).

10. The device of claim 9, wherein the combination portion (236) is formed by die casting, and the guide portion (238) is formed on the combination portion (236) which is formed by insert injection molding.

11. The device of claim 9, wherein the injection hole (237) has an inside surface which has a step-shaped cross section by the fixing protrusion.

## Patentansprüche

1. Mobiles persönliches Gerät mit einem ersten Gerätekörper (110, 210), der ein erstes oberes Gehäuse (122, 212) und ein erstes unteres Gehäuse (114) hat sowie mit einem zweiten Gerätekörper (120, 220), der ein zweites oberes Gehäuse (122) und ein zweites unteres Gehäuse (124, 224) hat, um sich auf dem ersten Gerätekörper (110, 210) gleitend zu bewegen, wobei das mobile persönliche Gerät aufweist:
eine Gleitführung (130, 230), die mit dem ersten oberen Gehäuse (112, 212) des ersten Gerätekörpers (110, 210) kombiniert ist, wobei die Gleitführung (130, 230) eine in Längsrichtung darin ausgebildete Führungsbohrung (132, 232) aufweist; und
eine Achse (140, 240), die in die Führungsbohrung (132, 232) eingesetzt ist, um sich entlang der Führungsbohrung (132, 232) zu bewegen;
wobei das zweite untere Gehäuse (124, 224) um einen vorgegebenen Abstand von der Achse (140, 240) beabstandet ist und beide Enden der Achse (140, 240) direkt aufnimmt,
wobei das zweite untere Gehäuse (124, 224) einen ersten Achsenaufnahmeabschnitt (126, 226) und einen zweiten Achsenaufnahmeabschnitt (128, 228) hat, die im hinteren Abschnitt des zweiten unteren Gehäuses (124, 224) zum ersten Gerätekörper (110, 210) weisend ausgebildet sind und jeweils beide Enden der Achse (140, 240) aufnehmen,
wobei sich der zweite Gerätekörper (120, 220) entlang der Führungsbohrung (132, 232) mit der Achse (140, 240) bewegt.

2. Gerät nach Anspruch 1, bei dem die Gleitführung (130, 230) ein Schraubenloch (134, 234), der erste Gerätekörper (110, 210) eine entsprechend dem Schraubenloch (134, 234) ausgebildete Passbohrung (118, 218) aufweist, und eine Schraube (119) über die Passbohrung (118, 218) eingesetzt wird, um mit dem Schraubenloch (134, 234) gekoppelt zu werden.

3. Gerät nach Anspruch 2, bei dem der erste Gerätekörper (110, 210) einen Aufnahmeabschnitt (116, 216) enthält, um die Gleitführung (130, 230) teilweise aufzunehmen.

4. Gerät nach Anspruch 1, bei dem die Gleitführung (130, 230) aus einem Gleitmaterial besteht und durch Spritzgießen hergestellt wird.

5. Gerät nach Anspruch 1, bei dem eine Seite des ersten Achsenaufnahmeabschnitts (226) geschlossen ist, um ein Ende der Achse (240) zu lagern, beide Seiten des zweiten Achsenaufnahmeabschnitts (228) offen sind, um die Achse (240) durchzuführen und ein Fixierungsbügel (229) in eine offene Außenseite des zweiten Achsenaufnahmeabschnitts (228) eingeführt wird, um die Achse (240) am ersten und zweiten Achsenaufnahmeabschnitt (226, 228) zu fixieren.

6. Gerät nach Anspruch 1, bei dem eine Torsionsfeder (250) zwischen dem ersten oberen Gehäuse (212) und dem zweiten unteren Gehäuse (224) angeordnet ist, wobei ein Ende der Torsionsfeder (250) drehbar mit dem ersten oberen Gehäuse (212) kombiniert und das andere Ende der Torsionsfeder (250) drehbar mit dem zweiten unteren Gehäuse (224) kombiniert ist.

7. Gerät nach Anspruch 6, bei dem das zweite untere Gehäuse (224) aufweist:
einen Federhalteabschnitt (254), der mit dem anderen Ende der Torsionsfeder (250) kombiniert und eine erdnussförmige Bohrung (255), die mit dem Federhalteabschnitt (254) kombiniert ist,
wobei der Federhalteabschnitt (254) eine in der Mitte des Federhalteabschnitts (254) ausgebildete Federbohrung und eine am Umfang der Federbohrung ausgebildete Nut (254-1) hat,
wobei die erdnussförmige Bohrung (255) aus einem großen und einem kleinen Raum zusammengesetzt ist, der relativ kleiner als der große Raum ist und vom großen Raum überlappt wird, und
wobei der Federhalteabschnitt (254) mit der erdnussförmigen Bohrung (255) kombiniert wird, während er sich in der erdnussförmigen Bohrung (255) vom großen zum kleinen Raum bewegt.

8. Gerät nach Anspruch 1, bei dem O-Ringe (242) an beiden Endabschnitten der Achse (240) so vorgesehen sind, dass sie jeweils mit dem ersten und zweiten Achsenaufnahmeabschnitt (226, 228) in Kontakt stehen.

9. Gerät nach Anspruch 1, bei dem die Gleitführung (230) aufweist:
einen Kombinationsabschnitt (236) aus Metall, wobei der Kombinationsabschnitt (236) ein Schraubenloch (234) und eine Einspritzbohrung (237) aufweist, die mit einem Fixiervorsprung ausgebildet ist; und
bei dem der Führungsabschnitt (238) mit dem der Kombinationsabschnitt (236) mittels des Fixiervorsprungs durch plastischen Formen integral ausgebildet ist,
wobei die Führungsbohrung (232) im Führungsabschnitt (238) ausgebildet ist.

10. Gerät nach Anspruch 9, bei dem der Kombinationsabschnitt (236) durch Druckgießen ausgebildet ist und der Führungsabschnitt (238) am Kombinationsabschnitt (236), der durch Einsatzspritzgießen ausgebildet ist, angeformt ist.

11. Gerät nach Anspruch 9, bei dem die Einspritzbohrung (237) eine Innenoberfläche mit einem durch den Fixiervorsprung gebildeten stufenförmigen Querschnitt hat.

## Revendications

1. Dispositif portable personnel incluant un premier corps de dispositif (110, 210) ayant un premier boîtier supérieur (112, 212) et un premier boîtier inférieur (114), et un second corps de dispositif (120, 220) ayant un second boîtier supérieur (122) et un second boîtier inférieur (124, 224) pour se déplacer en coulissement sur le premier corps de dispositif (110, 210), le dispositif portable personnel comprenant :
un guide de coulissement (130, 230) combiné avec le premier boîtier supérieur (112, 212) du premier corps de dispositif (110, 210), le guide de coulissement (130, 230) comprenant un trou guide (132, 232) formé longitudinalement à l'intérieur ; et
une tige (140, 240) qui est introduite dans le trou guide (132, 232) pour se déplacer le long du trou guide (132, 232) ;
dans lequel le second boîtier inférieur (124, 224) est écarté de la tige (140, 240) d'une distance prédéterminée et reçoit directement les deux extrémités de la tige (140, 240),
dans lequel le second boîtier inférieur (124, 224) comporte une première portion de réception de tige (126, 226) et une seconde portion de réception de tige (128, 228) formée dans une portion postérieure du second boîtier inférieur (124, 224) en face du premier corps de dispositif (110, 210) et reçoit respectivement les deux extrémités de la tige (140, 240), et
dans lequel le second corps de dispositif (120, 220) se déplace le long du trou guide (132, 232) avec la tige (140, 240).

2. Dispositif selon la revendication 1, dans lequel le guide de coulissement (130, 230) comprend un trou à vis (134, 234), le premier corps de dispositif (110, 210) comprenant un trou de logement (118, 218) formé en correspondance du trou à vis (134, 234), et une vis (119) entre via le trou de logement (118, 218) pour être couplée avec le trou à vis (134, 234).

3. Dispositif selon la revendication 2, dans lequel le premier corps de dispositif (110, 210) inclut une portion de réception (116, 216) pour recevoir partiellement le guide de coulissement (130, 230).

4. Dispositif selon la revendication 1, dans lequel le guide de coulissement (130, 230) est réalisé en un matériau lubrifiant et est formé par moulage par injection.

5. Dispositif selon la revendication 1, dans lequel un côté de la première portion de réception de tige (226) est fermé pour supporter une extrémité de la tige (240), les deux côtés de la seconde portion de réception de tige (128) sont ouvertes pour faire passer la tige (240), et une platine de fixation (229) est introduite dans une partie extérieure ouverte de la seconde portion de réception de tige (228) pour fixer la tige (240) sur la première et la seconde portion de réception de tige (226, 228).

6. Dispositif selon la revendication 1, dans lequel un ressort de torsion (250) est interposé entre le premier boîtier supérieur (112) et le second boîtier inférieur (224), une extrémité du ressort de torsion (250) est combinée en rotation avec le premier boîtier supérieur (212), et l'autre extrémité du ressort de torsion (250) est combinée en rotation avec le second boîtier inférieur (224).

7. Dispositif selon la revendication 6, dans lequel le second boîtier inférieur (224) comprend :
une portion de maintien de ressort (254) combinée avec l'autre extrémité du ressort de torsion (250) et un trou en forme de cacahouète (255) combiné avec la portion de maintien de ressort (254),
la portion de maintien de ressort (254) comporte un trou à ressort formé au centre de la portion de maintien de ressort (254) et une gorge (254-1) formée sur une périphérie du trou à ressort,
le trou en forme de cacahouète (255) est composé d'un espace de grande taille et d'un espace de petite taille qui est relativement plus petit que l'espace de grande taille et qui est en chevauchement avec l'espace de grande taille, et
la portion de maintien de ressort (254) est combinée avec le trou en forme de cacahouète (255) tout en se déplaçant de l'espace de grande taille vers l'espace de petite taille dans le trou en forme de cacahouète (255).

8. Dispositif selon la revendication 1, dans lequel des joints toriques (242) sont prévus sur les deux portions terminales des tiges (240) pour être respectivement en contact avec la première et la seconde portion de réception de tige (226, 228).

9. Dispositif selon la revendication 1, dans lequel le guide de coulissement (230) comprend :
une portion de combinaison (236) réalisée en métal, la portion de combinaison (236) comprenant un trou à vis (234) et un trou d'injection (237) formé avec une projection de fixation ; et
une portion guide (238) formée intégralement avec la portion de combinaison (236) au moyen de la projection de fixation par moulage en matière plastique,
dans lequel le trou guide (232) est formé dans la portion guide (238).

10. Dispositif selon la revendication 9, dans lequel la portion de combinaison (236) est formée par moulage, et la portion guide (238) est formée sur la portion de combinaison (236) qui est formée par moulage par injection sur insert.

11. Dispositif selon la revendication 9, dans lequel le trou d'injection (237) possède une surface intérieure qui présente une section transversale en gradins, par la projection de fixation.
